# EUROPÄISCHE PATENTANMELDUNG

(11) **EP 4 617 585 A1**
(43) Veröffentlichungstag der Anmeldung: **17.09.2025**
(21) Anmeldenummer: 25162229.6
(22) Anmeldetag: 07.03.2025
(51) Int. Cl.: F24H 9/20, F16K 15/03, F23D 14/82, F23L 3/00, F23L 13/02

(54) **RÜCKSTROMSICHERUNGSVENTIL FÜR EIN HEIZGERÄT, HEIZGERÄT UND HEIZUNGSANLAGE**

(30) Priorität: 11.03.2024 DE 102024106816
(71) Anmelder: Vaillant GmbH, 42859 Remscheid NRW (DE)
(72) Erfinder: Rebien, Karsten, 42489 Wülfrath (DE); Mersch, Frank, 58332 Schwelm (DE)
(74) Vertreter: Popp, Carsten

(57) **Zusammenfassung**

Vorgeschlagen wird ein Rückstromsicherungsventil (1) für eine Heizungsanlage (2). Diese umfasst ein um eine Drehachse (15) drehbares Klappenteil (12), eingerichtet, sich in einer geschlossenen Drehposition dichtend an ein Dichtelement (20) anzulegen, wobei das Klappenteil (12) mindestens zwei Segmente (17, 19) aufweist, die durch mindestens einen linienförmigen Scharnierbereich (16, 18) miteinander verbunden sind und der Scharnierbereich (16, 18) gegenüber den Segmenten (17, 19) des Klappenteils (12) eine erhöhte Verformbarkeit gegenüber Biegebelastungen aufweist, wobei der Scharnierbereich (16, 18) ein, mindestens ein Mittelsegment (19) umlaufendes und geschlossenes, Umlaufscharnier (18) und mehrere von dem Umlaufscharnier (18) radial zu einer Außenkontur (23) des Klappenteils (12) verlaufende Randscharniere (16) umfasst. Das Rückstromsicherungsventil (1) kann somit eine Dichtwirkung auch bei Unebenheiten der Dichtfläche ausbilden und trotzdem auftretenden Druckstößen standhalten. Zudem werden ein Heizgerät (3) sowie eine Heizungsanlage (2) vorgeschlagen.

## Beschreibung

Die Erfindung betrifft ein Rückstromsicherungsventil für ein Heizgerät, ein Heizgerät mit einem entsprechenden Rückstromsicherungsventil sowie eine Heizungsanlage mit einem entsprechenden Rückstromsicherungsventil. Insbesondere wird ein Rückstromsicherungsventil, das eine große Betriebssicherheit sowie hohen Nutzerkomfort bietet, bereitgestellt.

Wenn mehrere Heizgeräte, wie beispielsweise in einem Mehrparteienhaus, an einem gemeinsamen Abgassystem angeschlossen sind, spricht man allgemein auch von einer Mehrfachbelegung des Abgassystems.

Gemäß dem Stand der Technik besteht bei Mehrfachbelegung von Heizungsgeräten an einem Abgassystem stets das Problem, dass Abgase eines Gerätes in einem anderen an das Abgassystem angeschlossenen Gerät austreten können. Diese Gefahr besteht vorwiegend dann, wenn ein Heizgerät abgeschaltet ist und somit keinen Gegendruck aufbaut. Hierzu sind Rückstromsicherungsventile vorgesehen oder häufig auch vorgeschrieben, die in dem Strömungsweg des Heizgerätes angeordnet werden und eine Durchströmung des abgeschalteten Heizgerätes verhindern. Hierzu gibt es in den Heizgeräten jeweils ein Rückstromsicherungsventil, welches eine Durchströmung des abgeschalteten Heizgerätes, bzw. eine Durchströmung in einer Durchströmungsrichtung, entgegengesetzt der regulären, beim Betrieb auftretenden, Durchströmungsrichtung verhindern soll.

Es ist bekannt Rückstromsicherungsventile bzw. -klappen in den Abgaskanal eines Heizgerätes einzubauen. Es können beim Betrieb von Rückstromsicherungsventilen jedoch Geräusche auftreten, die vom Nutzer als störend empfunden werden und so den Nutzerkomfort einschränken. Zudem müssen die Rückstromsicherungsventile im Abgaskanal dazu eingerichtet sein, den Umgebungsbedingungen im Abgaskanal zu widerstehen und benötigen zusätzliche Einbauten, beispielsweise um Kondensat ableiten zu können. Zudem ist eine Überprüfung eines im Abgaskanal verbauten Rückstromsicherungsventils sowie ein nachträglicher Einbau in einen Abgaskanal sehr aufwendig.

Ein solches Rückschlagventil, angeordnet in einer Luftzuführung eines Heizgeräts, wird unter anderem in der DE 10 2022 116 819 A1 beschrieben.

Auch die EP 3 748 229 A1 beschreibt ein Rückstromsicherungsventil. Eine Klappe des Rückstromsicherungsventils kann dabei auch Schlitze umfassen, die eine Flexibilität der Klappe sicherstellen und Unebenheiten in der Dichtfläche ausgleichen können. Diese Klappe kann nachteilig quadratische oder runde Leitungen nur ungenügend abdichten.

Es ist weiter bekannt, Rückstromsicherungsventile bzw. -klappen in einem Heizgerät anzuordnen. Für eine Überprüfung ist häufig ein Öffnen des Gas-Luftweges notwendig, der aufgrund der hohen Dichtheitsanforderungen aufwendig ist und nur von speziell geschulten Installateuren durchgeführt werden darf. Ein derartiges Rückstromsicherungsventil zum Einbau benachbart zu einer Fördereinrichtung innerhalb des Heizgerätes wird beispielsweise in der EP 2 871 393 A1 vorgestellt. Diese wird über ein Zweikomponentenspritzgussverfahren hergestellt und es werden eine erste und eine zweite elastische Weichdichtung angespritzt. Dieses Herstellungsverfahren ist zudem sehr aufwendig.

Häufig treten durch den Betrieb anderer Heizgeräte der Mehrfachbelegung Druckschwankungen auf, die einen Unterdruck auf der Öffnungsseite des Rückstromsicherungsventils bewirken und eine Öffnungsbewegung eines dünn und leicht ausgebildeten Rückstromsicherungsventils anregen können, und damit eine Abgasrückströmung ermöglichen. Zudem sollte das Rückstromsicherungsventile in der Lage sein, Unebenheiten der Dichtfläche auszugleichen, um eine ausreichende Dichtwirkung zu erzielen.

Es ist daher Aufgabe der Erfindung, ein Rückstromsicherungsventil bereitzustellen, welches die Betriebssicherheit eines Heizgeräts in Mehrfachbelegungsanlagen mit diesem Rückstromsicherungsventil erhöht. Zudem soll das Rückstromsicherungsventil den Nutzerkomfort und die Geräteleistung minimal einschränken.

Zudem soll ein Rückstromsicherungsventil geschaffen werden, welches eine einfache Montage ermöglicht und ein sicheres Abdichten gewährleistet. Das Rückstromsicherungsventil soll zudem einfach herzustellen sein.

Diese Aufgaben werden gelöst durch die Merkmale der unabhängigen Patentansprüche. Weitere vorteilhafte Ausgestaltungen der hier vorgeschlagenen Lösung sind in den unabhängigen Patentansprüchen angegeben. Es wird darauf hingewiesen, dass die in den abhängigen Patentansprüchen aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden. Vorteilhafte Ausgestaltungen ergeben sich durch die Merkmale der abhängigen Ansprüche.

Hierzu trägt ein Rückstromsicherungsventil für eine Heizungsanlage bei, das ein um eine Drehachse drehbares Klappenteil umfasst, das dazu eingerichtet ist, sich in einer geschlossenen Drehposition dichtend an ein Dichtelement anzulegen. Das Klappenteil weist mindestens zwei Segmente auf, die durch mindestens einen linienförmigen Scharnierbereich miteinander verbunden sind. Der Scharnierbereich weist gegenüber den Segmenten des Klappenteil eine erhöhte Verformbarkeit, insbesondere gegenüber Biegebelastungen, auf. Dabei weist der Scharnierbereich ein, mindestens ein Mittelsegment umlaufendes und geschlossenes, Umlaufscharnier sowie mehrere von dem Umlaufscharnier radial zu einer Außenkontur des Klappenteils verlaufende Randscharniere auf.

Die Heizungsanlage kann ein Heizgerät umfassen, das dazu eingerichtet ist, einen Brennstoff (Brenngas, Erdgas, Wasserstoff, Heizöl) unter Zuführung von Umgebungsluft zu verbrennen und die Verbrennungsprodukte einer Abgasanlage zuzuführen. Hierzu kann das Heizgerät eine Fördereinrichtung umfassen, die Umgebungsluft über ein Zuluftrohr ansaugt und einer Brennkammer des Heizgerätes zuführt. Zudem kann ein Brennstoffventil derart gesteuert werden, dass ein dem zugeführten Massestrom Verbrennungsluft bzw. Umgebungsluft gemäß einem vorgegebenen Verbrennungsluftverhältnis entsprechender Massestrom Brennstoff zugesetzt wird. Die Heizungsanlage kann eine Abgasanlage umfassen, an der mehrere Heizgeräte angeschlossen sind und somit eine Mehrfachbelegung ausbildet.

Das Rückstromsicherungsventil dient dazu, eine Gasströmung nur in eine Vorzugsrichtung zuzulassen und im Fall einer gegenläufigen Gasströmung den Strömungsquerschnitt sicher zu verschließen und abzudichten. Das Rückstromsicherungsventil umfasst (mindestens) ein Klappenteil, das drehbar um eine Drehachse gelagert ist und durch eine Öffnungsbewegung (Drehung um die Drehachse) einen Strömungsweg in einer regulären Durchströmungsrichtung der Heizungsanlage freigeben/ öffnen und verschließen kann. Dabei kann der Strömungsweg insbesondere in der Durchströmungsrichtung der Heizungsanlage bzw. des Heizgerätes geöffnet werden. Eine Durchströmung des Rückstromsicherungsventils in einer Richtung entgegengesetzt der regulären Durchströmungsrichtung kann durch das Rückstromsicherungsventil verhindert werden. Die reguläre Durchströmungsrichtung bezeichnet die sich bei einem regulären Betrieb des Heizgerätes ausbildende Durchströmungsrichtung.

Das Rückstromsicherungsventil kann zudem ein (umlaufendes) Rahmenteil umfassen, das eingerichtet zur Verbindung mit einem Teil des Strömungsweges der Heizungsanlage ist, also einem Abgaskanal, einem Teil der Abgasanlage oder einem Teil der Zuführung Verbrennungsluft, insbesondere einem Zuluftrohr der Zuführung Verbrennungsluft. An dem Rahmenteil kann das Klappenteil mittels eines Scharniers drehbar befestigt sein.

Das Rahmenteil kann zudem ein (insbesondere integrales) Dichtelement aufweisen, an dem sich das Klappenteil in einem geschlossenen Zustand des Rückstromsicherungsventils dichtend anlegt, wodurch der Strömungsweg verschlossen werden kann. Gemäß einer Ausgestaltung kann das Rahmenteil auch durch das Dichtelement gebildet werden, wobei das Scharnier zur drehbaren Lagerung des Klappenteils am Dichtelement befestigt sein kann.

Das Rückstromsicherungsventil kann (nur) zweiteilig aufgebaut sein und aus dem Klappenteil und dem Rahmenteil bestehen.

Das Klappenteil kann ein im Wesentlichen ebenes Gebilde mit einer Materialdicke bzw. Materialstärke sein. In einem Randbereich, also einem Bereich einer Außenkontur des Klappenteils, kann eine (ggf. auch integral ausgebildete oder einstückig angeformte) Dichtlippe angeordnet sein, die sich im geschossenen Zustand des Rückstromsicherungsventils dichtend an das Rahmenteil bzw. das Dichtelement anlegen kann.

Das Klappenteil umfasst mindestens einen linienförmigen Scharnierbereich, der innerhalb des Klappenteils angeordnet ist. Der mindestens eine Scharnierbereich kann das Klappenteil in Segmente unterteilen. Der linienförmige Scharnierbereich ist derart ausgebildet, dass dieser eine erhöhte elastische Verformbarkeit gegenüber auftretenden Biegebelastungen aufweist. Die elastische Verformbarkeit bzw. elastische Biegung erfolgt dabei um eine Achse, die der durch die Linienform gebildete Linie des Scharnierbereichs entspricht. Der linienförmige Scharnierbereich kann insofern auch als ein linienförmiges Scharnier verstanden werden.

Die Ausbildung mindestens eines Scharnierbereichs, der das Klappenteil in mindestens zwei Segmente unterteilt, kann das Anlegen an eine gegebenenfalls etwas unebene Dichtfläche bzw. an ein etwas unebenes Dichtelement vereinfachen und somit eine dauerhafte Dichtwirkung des Rückstromsicherungsventils sicherstellen. Zudem bleibt das Klappenteil ausreichend biegesteif, um möglicherweise auftretenden Druckstößen, durch verspätete, harte Zündung zu widerstehen und den Strömungsweg in einem solchen Fall sicher zu verschließen. Insofern kann ein hier vorgeschlagenes Rückstromsicherungsventil wesentlich zu einem sicheren Betrieb des Heizgerätes beitragen. Zudem kann das Klappenteil des vorgeschlagenen Rückstromsicherungsventils einen materialbedingten Verzug, beispielsweise aufgrund von Temperaturschwankungen, ausgleichen.

Gemäß einer Ausgestaltung kann der Scharnierbereich durch eine, gegenüber den Segmenten geminderte Materialstärke bzw. Materialdicke, gebildet werden. Beispielhaft kann ein Scharnierbereich durch eine Nut in dem Klappenteil gebildet werden. Die Nut kann eingebracht, beispielsweise gefräst, oder auch im Rahmen der Herstellung des Klappenteils erzeugt werden.

Gemäß einer Ausgestaltung kann sich der mindestens eine Scharnierbereich bei Erreichen bzw. nach dem Erreichen einer vorgegebenen Durchbiegung versteifen. Mit anderen Worten kann eine Biegung um die von der Linienform des Scharnierbereichs gebildete Linie nur bis zu einem vorgegebenen Winkel, der der vorgegebenen Durchbiegung entsprechen kann, ermöglicht sein und oberhalb des vorgegebenen Winkels verhindert sein. Die vorgegebene Durchbiegung bzw. der vorgegebene Winkel kann im Vorfeld im Rahmen von Laborversuchen ermittelt worden sein.

Gemäß einer Ausgestaltung kann der Scharnierbereich dazu eingerichtet bzw. derart gewählt sein, einem vorgegebenen Druckstoß zu widerstehen, also bis zu einer vorgegebenen Druckgröße keine Verformung / Durchbiegung zuzulassen. Der vorgegebene Druckstoß kann dabei beispielsweise ein Flammenrückschlag und/oder eine harte Zündung des Heizgerätes sein.

Gemäß einer Ausgestaltung kann eine Breite einer Nut als Scharnierbereich derart gewählt sein, dass ab der vorgegebenen Durchbiegung des Klappenteils die Randbereiche der Nut sich kontaktieren und so das Klappenteil aussteifen. Mit anderen Worten kann durch die Breite und Tiefe der Nut die vorgegebene Durchbiegung eines Scharnierbereiches vorgegeben werden, und so gezielt eine Widerstandskraft des Klappenteils gegenüber einem vorgegebenen Druckstoß eingestellt werden. Vorteilhaft kann das Klappenteil sich so flexibel an Unebenheiten des Dichtelementes anpassen und gleichzeitig eine hohe Widerstandskraft gegenüber Druckstößen (vorgegebener Größe), und damit größeren Verformungen aufweisen.

Gemäß einer Ausgestaltung kann eine Breite der Nut als Scharnierbereich 5 % bis 50 % er Tiefe der Nut betragen.

Dabei umfasst der Scharnierbereich bzw. das Klappenteil mindestens ein Mittelsegment, das von einem Umlaufscharnier begrenzt ist. Von dem Umlaufscharnier verlaufen mehrere Randscharniere radial nach außen zur Außenkontur des Klappenteils. Dabei kann das Umlaufscharnier im Wesentlichen äquidistant zu der Außenkontur (dem umlaufenden Rand) des Klappenteils verlaufen. Insofern kann sich ein Mittelsegment (inneres Segment) ausbilden, das von dem Umlaufscharnier begrenzt sein kann, sowie Randsegmente, die von dem Umlaufscharnier, der Außenkontur des Klappenteils und zwei Randscharnieren begrenzt sein können. Gemäß einer Ausgestaltung können beispielhaft 5 bis 10 Randsegmente vorgesehen sein. Vorteilhaft kann so die Dichtheit des Rückstromsicherungsventils bzw. des Klappenteils erheblich verbessert werden, da eine Flexibilität bzw. Biegsamkeit nach dem Prinzip der Plattenbiegung des Klappenteils um beliebige Biegeachsen (insbesondere den beiden Flächenachsen des Klappenteils) innerhalb des Klappenteils gegeben ist. Diese Flexibilität ermöglicht beliebige Verformungen der Dichtfläche auszugleichen. Die hier vorgeschlagene dreidimensionale Segmentierung des Kappenteils kann dabei gezielt derart ausgestaltet sein, dass im Falle eines Druckstoßes (beispielsweise aufgrund einer Rückzündung oder eines Flammenrückschlags) die Steifigkeit des Klappenteils selbsterhöhend ist.

Gemäß einer Ausgestaltung kann das Klappenteil des Rückstromsicherheitsventils im Einbauzustand ein vorgegebenes Mindestgewicht aufweisen, das in Verbindung mit einer vorgegebenen Schräglage der Einbauposition des Rückstromsicherheitsventils bzw. des Klappenteils eine Dichtheit auch bei einem vorgegebenen Unterdruck auf der Öffnungsseite des Klappenteils gewährleistet. Mit anderen Worten kann die von dem Gewicht des Klappenteils verursachte Gewichtskraft desselben in Verbindung mit der Schräglage des Klappenteils eine Dichtkraft des Klappenteils bzw. des Rückstromsicherheitsventils bewirken, die gezielt derart eingestellt ist, dass einem vorgegebenen Unterdruck auf der Öffnungsseite des Klappenteils ohne Öffnung widerstanden wird. Die Öffnungsseite ist hierbei eine Seite des Rückstromsicherheitsventils, in deren Richtung das Klappenteil öffnet. Mit nochmals anderen Worten kann somit eine Mindestdruckdifferenz eingestellt werden, bei der das Klappenteil bzw. das Rückstromsicherheitsventil regulär öffnet. Unterdrücke, die beispielsweise durch den Betrieb anderer Heizgeräte der Mehrfachbelegungsanlage verursacht werden und unterhalb der Mindestdruckdifferenz liegen, führen daher nicht zu einer Öffnung des Rückstromsicherheitsventils, wodurch vorteilhaft die Betriebssicherheit erhöht werden kann. Dies ist insbesondere relevant bei der Anordnung des Rückstromsicherheitsventils in einer Luftzuführung des Heizgeräts. In vorteilhafter Weise kann somit ein Optimum zwischen einem minimalen Materialaufwand, einem minimalen Strömungswiderstand des Rückstromsicherheitsventils (die insbesondere einen minimalen Strömungswiderstand bei hoher Geräteleistung sicherstellen soll) und einem Verhältnis der Masse des Klappenteils und dessen Schräglage (zur Sicherstellung der Dichtheit auch bei einem Unterdruck auf der Öffnungsseite) realisiert werden.

Gemäß einer Ausgestaltung kann das Klappenteil weitestgehend kreisförmig, oval, oder in Form eines n-Eckes, beispielsweise eines regelmäßigen n-Eckes, ausgebildet sein. Es kann einen geraden Bereich im Bereich der drehbaren Befestigung an dem Rahmenteil geben.

Gemäß einer Ausgestaltung kann das das Rahmenteil aus einem Kunststoff und/ oder einem metallischen Werkstoff bestehen. Das Klappenteil kann insbesondere aus einem Elastomer, beispielsweise Gummi oder Silikon, bestehen bzw. dieses zumindest teilweise aufweisen.

Gemäß einer Ausgestaltung kann das Klappenteil in einem Randbereich bzw. im Bereich des umlaufenden Randes/ der Außenkontur eine Dichtlippe umfassen, eingerichtet zur dichtenden Anlage an dem Dichtelement.

Nach einem weiteren Aspekt wird eine Heizungsanlage mit einem hier beschriebenen Rückstromsicherungsventil vorgeschlagen. Die Heizungsanlage kann ein Heizgerät umfassen. Bei dem Heizgerät handelt es sich in der Regel um ein Gas- und/oder Ölheizgerät. Dies betrifft mit anderen Worten insbesondere ein Heizgerät, welches dazu eingerichtet ist, einen oder mehrere fossile Brennstoffe wie etwa Erdgas und/oder Erdöl, ggf. unter Zufuhr von Umgebungsluft in einem Gebäude zu verbrennen, um Energie zur Erwärmung von beispielsweise Wasser zum Gebrauch in einer Wohnung zu erzeugen. Beispielsweise kann es sich bei dem Heizgerät um ein sogenanntes Gas-Brennwertgerät handeln. Das Heizgerät weist in der Regel zumindest einen Brenner und eine Fördereinrichtung wie etwa ein Gebläse auf, die ein Gemisch von Brennstoff (Gas) und Verbrennungsluft (durch einen Gemischkanal des Heizgeräts) zum Brenner fördert. Anschließend kann das durch die Verbrennung entstehende Abgas durch ein (internes) Abgasrohr des Heizgeräts zu einer Abgasanlage (eines Hauses) der Heizungsanlage geführt werden. An dieser Abgasanlage sind in der Regel mehrere Heizgeräte angeschlossen, diese ist somit mehrfachbelegt. Das Rückstromsicherheitsventil kann dabei in einem Strömungsweg der Heizungsanlage angeordnet sein, insbesondere in einer Zuführung Verbrennungsluft und/ oder in der Abgasanlage.

Gemäß einer Ausgestaltung kann das Rückstromsicherungsventil in einem Zuluftrohr zur Zuführung der Verbrennungsluft angeordnet sein. Das Zuluftrohr bezeichnet dabei insbesondere einen Bereich der Zuführung der Verbrennungsluft, der in einer Durchströmungsrichtung des Heizgerätes bzw. der Heizungsanlage gesehen, einer Beimischung des Brennstoffes vorgelagert ist. Vorteilhaft ist, dass für einen Verbau in einem Zuluftrohr ein Öffnen des Gas-Luftweges nicht notwendig ist, und damit verbundene Sicherheitsvorkehrungen somit nicht beachtet werden müssen. Insofern ist eine, gegebenenfalls nachträgliche, Installation eines hier vorgeschlagenen Rückstromsicherungsventils besonders einfach möglich.

Das Zuluftrohr kann sich dabei innerhalb eines Gehäuses des Heizgerätes befinden. Insofern wird nach einem weiteren Aspekt der vorliegenden Erfindung auch ein Heizgerät mit einem hier beschriebenen Rückstromsicherungsventil vorgeschlagen.

Die im Zusammenhang mit dem Rückstromsicherungsventil erörterten Details, Merkmale und vorteilhaften Ausgestaltungen können entsprechend auch bei dem hier vorgestellten Heizgerät und/oder der Heizungsanlage auftreten und umgekehrt. Insoweit wird auf die dortigen Ausführungen zur näheren Charakterisierung der Merkmale vollumfänglich Bezug genommen.

Hier werden somit ein Rückstromsicherungsventil, eine Heizungsanlage sowie ein Heizgerät angegeben, welche die mit Bezug auf den Stand der Technik geschilderten Probleme zumindest teilweise lösen. Insbesondere tragen das Rückstromsicherungsventil sowie das Heizgerät und die Heizungsanlage zumindest dazu bei, ein besonders einfach aufgebautes Rückstromsicherungsventil, dass die Betriebssicherheit eines Heizgerätes und/ oder einer Heizungsanlage deutlich zu steigern vermag, zu verwirklichen. Vorteilhaft verbindet das vorgeschlagene Rückstromsicherungsventil eine hohe Dichtwirkung auch bei auftretenden Unebenheiten der Dichtflächen des Dichtelementes mit einer hohen Widerstandskraft gegenüber Druckstößen, beispielsweise ausgelöst durch eine verspätete oder harte Zündung.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: eine Heizungsanlage mit einem hier beschriebenen Rückstromsicherungsventil,
- Fig. 2:: eine Ansicht eines hier vorgeschlagenen Rückstromsicherungsventils, und
- Fig. 3:: ein Klappenteil eines hier vorgeschlagenen Rückstromsicherungsventils.

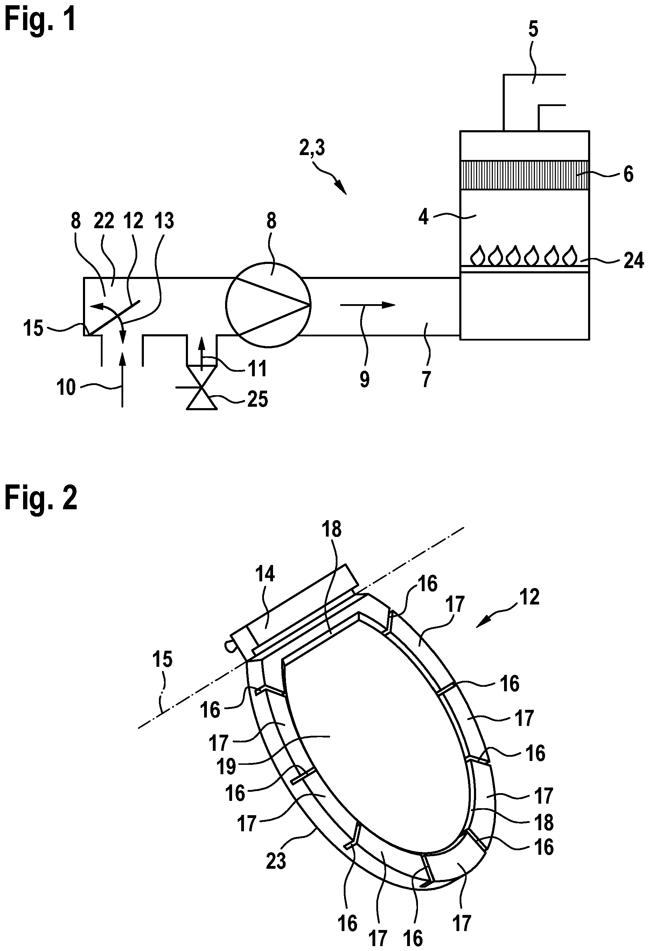

Figur 1 zeigt beispielhaft und schematisch eine hier vorgeschlagene Heizungsanlage 2 mit einem hier vorgeschlagenen Heizgerät 3 und einem hier vorgeschlagenen Rückstromsicherungsventil 1. Das Heizgerät 3 umfasst ein Zuführung Verbrennungsluft 10 und eine Zuführung Brennstoff 11, in der ein Gasventil 25 angeordnet sein kann. In einem Gemischkanal 7 kann eine Fördereinrichtung 8 angeordnet sein, die ein Verbrennungsgemisch aus Brennstoff und Verbrennungsluft in einer Durchströmungsrichtung 9 des Heizgerätes 3 einer Brennkammer 4 desselben zuführen kann. An einem in der Brennkammer 4 angeordneten Brenner 24 kann das Verbrennungsgemisch verbrennen und ein in Durchströmungsrichtung 9 gesehen nachgeordneter Wärmetauscher 6 kann bei der Verbrennung entstehende Wärme auf einen Wärmeträger, beispielsweise Brauch- oder Heizungswasser, übertragen. Die Verbrennungsprodukte bzw. Abgase können über eine Abgasanlage 5 der Heizungsanlage 2 abgeführt werden. An der Abgasanlage 5 können weitere Heizgeräte angeschlossen sein, so dass eine Mehrfachbelegung der Abgasanlage 5 vorliegen kann.

Das Rückstromsicherungsventil 1 umfasst ein Klappenteil 12, das um eine Drehachse 15 eine Öffnungsbewegung 13 ausführen kann. Das Rückstromsicherungsventil 1 kann beispielsweise in einem Zuluftrohr 22 der Zuführung Verbrennungsluft 10 angeordnet sein.

Fig. 2 zeigt beispielhaft ein Klappenteil 12 des Rückstromsicherungsventils 1. Diese kann Scharnierbereiche aufweisen, die als Umlaufscharnier 18 oder als Randscharnier 16 ausgebildet sein können. Das Umlaufscharnier 18 kann dabei weitestgehend äquidistant zu einer Außenkontur 23 des Klappenteils 12 verlaufen und ein Mittelsegment 19 bilden. Die Randscharniere 16 können von dem Umlaufscharnier 18 radial nach außen in Richtung zur Außenkontur 23 verlaufen und so Randsegmente 17 ausbilden. Die Randscharniere 16 schaffen so eine Beweglichkeit und damit Anpassungsfähigkeit der Außenkontur 23 an ein Dichtelement 20 und können Unebenheiten des Dichtelementes 20 ausgleichen und sich beispielsweise an ein verzogenes Dichtelement 20 anlegen und damit eine dichtende Verbindung zwischen Klappenteil 12 und Dichtelement 20 schaffen. Das Klappenteil 12 kann ein Scharnier 14 mit der Drehachse 15 aufweisen, mit dem dieses drehbar mit einem Rahmenteil des Rückstromsicherungsventils 1 verbunden werden kann. Im vorliegenden Ausführungsbeispiel kann das Rahmenteil durch das Dichtelement 20 gebildet werden.

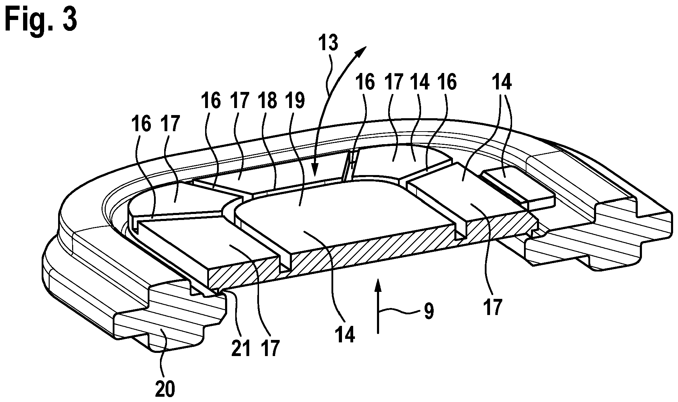

Fig. 3 zeigt eine Darstellung des Rückstromsicherungsventils 1. Das Dichtelement 20 kann das Klappenteil 12 derart aufnehmen, dass das Klappenteil 12 sich bei einer Durchströmung der Durchströmungsrichtung 9 durch Drehung um die Drehachse 15 mit einer Öffnungsbewegung 13 öffnen kann. Zur dichtenden Anlage am Dichtelement 20 kann das Klappenteil 12 eine Dichtlippe 21 umfassen. Das Dichtelement 20 kann im Zuluftrohr 22 befestigt werden.

### Bezugszeichenliste

- 1: Rückstromsicherungsventil
- 2: Heizungsanlage
- 3: Heizgerät
- 4: Brennkammer
- 5: Abgasanlage
- 6: Wärmetauscher
- 7: Gemischkanal
- 8: Fördereinrichtung
- 9: Durchströmungsrichtung
- 10: Zuführung Verbrennungsluft
- 11: Zuführung Brennstoff
- 12: Klappenteil
- 13: Öffnungsbewegung
- 14: Scharnier
- 15: Drehachse
- 16: Randscharnier
- 17: Randsegment
- 18: Umlaufscharnier
- 19: Mittelsegment
- 20: Dichtelement
- 21: Dichtlippe
- 22: Zuluftrohr
- 23: Außenkontur
- 24: Brenner
- 25: Gasventil

## Patentansprüche

1. Rückstromsicherungsventil (1) für eine Heizungsanlage (2), umfassend ein um eine Drehachse (15) drehbares Klappenteil (12), eingerichtet, sich in einer geschlossenen Drehposition dichtend an ein Dichtelement (20) anzulegen, wobei das Klappenteil (12) mindestens zwei Segmente (17, 19) aufweist, die durch mindestens einen linienförmigen Scharnierbereich (16, 18) miteinander verbunden sind, und der Scharnierbereich (16, 18) gegenüber den Segmenten (17, 19) des Klappenteils (12) eine erhöhte Verformbarkeit aufweist, wobei der Scharnierbereich (16, 18) ein, mindestens ein Mittelsegment (19) umlaufendes und geschlossenes, Umlaufscharnier (18) und mehrere von dem Umlaufscharnier (18) radial zu einer Außenkontur (23) des Klappenteils (12) verlaufende Randscharniere (16) umfasst.

2. Rückstromsicherungsventil (1) nach Anspruch 1, wobei das Klappenteil (12) einteilig ausgeführt ist.

3. Rückstromsicherungsventil (1) nach Anspruch 2, wobei der Scharnierbereich (16, 18) eine gegenüber den Segmenten (17, 19) geminderte Materialdicke aufweist.

4. Rückstromsicherheitsventil (1) nach einem der vorangehenden Ansprüche, wobei der mindestens eine Scharnierbereich (16, 18) bei Erreichen einer vorgegebenen Durchbiegung versteift.

5. Rückstromsicherheitsventil (1) nach Anspruch 4, wobei der Scharnierbereich (16, 18) dazu eingerichtet ist, einem vorgegebenen Druckstoß zu widerstehen.

6. Rückstromsicherungsventil (1) nach einem der vorangehenden Ansprüche, wobei das Klappenteil (12) des Rückstromsicherheitsventil (1) im Einbauzustand ein vorgegebenes Mindestgewicht aufweist, das in Verbindung mit einer vorgegebenen Schräglage der Einbauposition des Rückstromsicherheitsventils (1) eine Dichtheit auch bei einem vorgegebenen Unterdruck auf der Öffnungsseite des Klappenteils (12) gewährleistet.

7. Rückstromsicherungsventil (1) nach Anspruch 6, wobei das Umlaufscharnier (18) äquidistant zur Außenkontur (23) des Klappenteils (12) verläuft.

8. Rückstromsicherungsventil (1) nach einem der vorangehenden Ansprüche, wobei das Klappenteil (12) eine Kreisform, eine ovale Form oder die Form eines n-Eckes aufweist.

9. Rückstromsicherungsventil (1) nach einem der vorangehenden Ansprüche, wobei das Klappenteil (12) aus einem Kunststoff und /oder einem metallischen Werkstoff besteht.

10. Rückstromsicherungsventil (1) nach einem der vorangehenden Ansprüche, wobei das Klappenteil (12) eine Dichtlippe (21) umfasst, eingerichtet zur dichtenden Anlage an dem Dichtelement (20).

11. Heizgerät (3), aufweisend ein Rückstromsicherungsventil (1) nach einem der vorangehenden Ansprüche.

12. Heizgerät (3) nach Anspruch 11, wobei das Rückstromsicherungsventil (1) in einem Zuluftrohr (22) in einer Zuführung Verbrennungsluft (10) des Heizgerätes (3) angeordnet ist.

13. Heizungsanlage (2), aufweisend mindestens ein Rückstromsicherungsventil (1) nach einem der Ansprüche 1 bis 10 und/ oder ein Heizgerät (3) nach Anspruch 11 oder 12.
